# EUROPEAN PATENT APPLICATION

(11) **EP 3 719 670 A1**
(43) Date of publication of application: **07.10.2020**
(21) Application number: 19167382.1
(22) Date of filing: 04.04.2019
(51) Int. Cl.: G06F 16/93, G06F 16/383

(54) **METHOD FOR ARCHIVING DOCUMENTS**

(71) Applicant: Visma Consulting Oy, 00100 Helsinki (FI)
(72) Inventor: KUOSMANEN, Pekka, 00100 Helsinki (FI); TABATABAEI, Mohammad, 00400 Helsinki (FI)
(74) Representative: Salomäki, Juha Kari Ensio

(57) **Abstract**

Method for archiving documents, which the method utilizes artificial intelligence (AI) and machine learning (ML) to convert the corpus of documents into a numeric term-document matrix. Supervised and unsupervised machine learning (ML) methods are utilized to the mentioned numeric term-document matrix to analyze documents and to classify documents, extract the hidden hierarchies of documents, summarizes each document, extract keywords in each document, discover similarities among documents, and extract relevant metadata of each document.

## Description

### FIELD OF THE INVENTION

The object of the invention is a method as defined in the preamble of claim 1 to assist archivists in archiving documents to digital archive and to implement automated archive management by using artificial intelligence (AI) and machine learning (ML) algorithms. The method creates records schedules automatically and adds necessary metadata to the documents to be archived. In this application, the method according to the invention is also referred with the term "solution".

### BACKGROUND OF THE INVENTION

Archiving document to digital archive requires lots of manual work such as adding/mapping metadata to the documents to be archived. Integration software solutions known in prior art are not able to add metadata to a document and therefore the searching possibilities are limited. Thus, archiving is not cost effective.

At the moment, creating a record schedule of digital archive needs to be created and maintained manually. These kinds of solutions are slow and vulnerable for errors and mistakes. Moreover, records schedules may be changed due to new policies and regulations. Thus, updating current records schedules manually would be time consuming and financially expensive.

### OBJECT OF THE INVENTION

The object of the present invention is to eliminate the aforementioned drawbacks and to provide a method that applies artificial intelligence and machine learning in archiving documents to digital archive and implements automated archive management. The method according to the invention is characterized by what is disclosed in the characterization part of claim 1. Other embodiments of the invention are characterized by what is disclosed in the other claims.

### BRIEF DESCRIBTION OF THE INVENTION

The invention is a method for archiving documents. This method utilizes artificial intelligence (AI) and machine learning (ML) to convert the corpus of documents into a numerical term-document matrix. Supervised and unsupervised machine learning (ML) algorithms are applied on the mentioned numerical term-document matrix to analyze documents to classify documents, extract the hidden hierarchies of documents, summarizes each document, extract keywords from each document, discover similarities among documents, and extract relevant metadata of each document.

### ADVANTAGES OF THE INVENTION

In the method according to the invention AI/ML-algorithms automatically recognize metadata of a document from provided external sources and add the metadata to the document to be archived. Therefore, manual mapping of metadata and using integration software are no longer needed.

Another advantage is that the metadata can be extracted from the content of a document using Natural Language Processing methodology.

One advantage is also that by using AI/ML the record schedule can be created and shown automatically to archivists based on metadata and algorithms of the solution.

Another advantage is that the solution allows utilizing the content of the archived documents in data analytics of an organization.

Another advantage is that very limited manual work is needed in archiving and managing the digital archives. This will lead to huge cost savings and will increase the effectiveness of an organization.

### LIST OF FIGURES

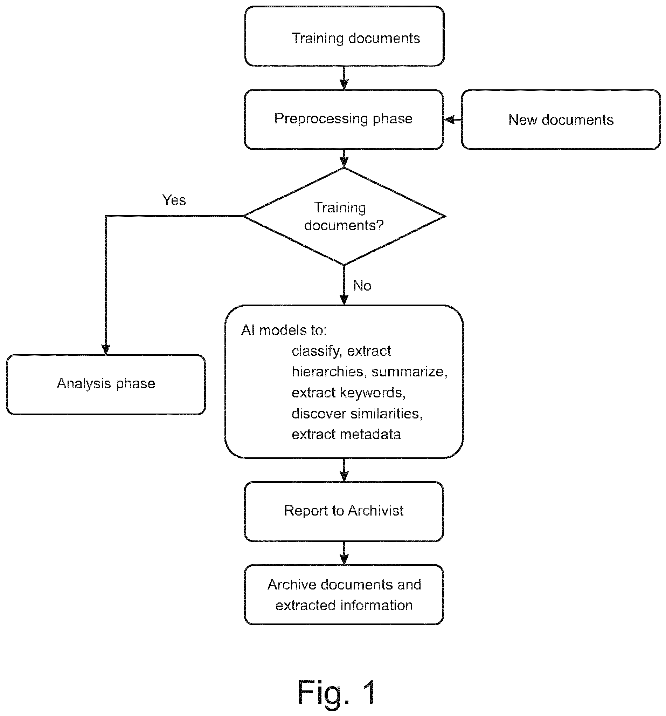

In the following, the invention will be described in a greater detail by the aid of an example of its embodiment with reference to the attached drawing, wherein
- Fig. 1: presents a flowchart of the method according to the invention.

### DETAILED DESCRIPTION OF THE INVENTION

The method according to the invention is arranged to assist archivists in archiving documents efficiently. By using the method documents are analyzed and relevant information such as keywords, topics, summary and metadata are extracted. The documents along with the relevant information are then archived for future usages.

The method requires a set of initial documents, henceforth called training documents. These documents along with well-known natural language processing algorithms are employed to build artificial intelligence (AI) models. These AI models are then utilized in a daily manner or according to some other schedule to process and to analyze new documents.

Figure 1 presents a flowchart of the method according to the invention. As can be seen in the figure 1, the method involves two main phases, namely, preprocessing and analysis phases to be discussed in more detail later in this application. In the preprocessing phase, the training documents are converted from words and texts into meaningful numerical data. This numerical data is then processed in the analysis phase, in which AI models are built to analyze the training documents, to extract the relevant information, and to archive the training documents and their corresponding relevant information.

To analyze new documents, as shown in Figure 1, they are converted into numerical data in the preprocessing phase. Then, by using the AI models already built in the analysis phase, relevant information of the new documents is extracted, and reported to archivists. The new documents and their corresponding relevant information are then archived.

The method according to the invention facilitates any query regarding the archived documents. Archivists can search through the archived documents by using keywords, topics, archival date, etc. Moreover, archivists can find documents which share similarity with a specific document in terms of content. To do that, the specific document is treated as a new document according to the flowchart in Figure 1. This new document is converted into numerical data in the preprocessing phase. The AI model assigned for this task is called to find similar documents and corresponding similarity scores.

New documents may contain new information which has not been provided by the training documents used to build the AI models. Therefore, based on a predefined schedule, the models already existed are updated. The archived documents, i.e. the training and new documents, have already been analyzed. Thus, the numerical data corresponding to the archived documents is ready. This numerical data is fed into the analysis phase. As a result, the AI models are retrained and updated. New information and changes are reported to archivist as well.

The preprocessing phase focuses on preparing training documents for the analysis phase. Once the training documents passed into the preprocessing phase, the content of each individual document is extracted and converted into a text format by using e.g. the Python package PyPDF2. Then, irrelevant words are omitted from the texts based on a predefined dataset containing all irrelevant words. This dataset known as stop words contains words which do not provide any information regarding the essence of the documents.

By using e.g. SKlearn and NLTK Python packages, the refined texts are then split into separated words, normalized, and then converted into numerical data. As a result, two matrices are obtained, i.e. the Term Frequency matrix (TF matrix) and Term Frequency-Inverse Document Frequency matrix (TFIDF matrix), in which rows and columns correspond to the separated words and documents' indices. In the TF matrix, each entity represents the frequency of a word in a document. In TFIDF matrix, an entity is treated as a weighting factor reflecting the importance of a word in a document. These two matrices as well as categories of documents are then passed into the analysis phase.

In the analysis phase, the TF and TFIDF matrices obtained from the preprocessing phase are analyzed. The analysis phase involves six tasks:
1. Building a model to classify documents,
2. Building a model to extract the hidden hierarchies of documents,
3. Building a model to summarize each document as well as documents in the same hierarchy,
4. Building a model to extract keywords in each document,
5. Building a model to discover similarities between a given specific document and other documents, and
6. Building a model to extract relevant metadata of each document.

Once the above-mentioned models are built, they are utilized to analyze new documents as shown in Figure 1.

In Task 1, a model is built to classify documents according to their categories. To do so, by using the TFIDF matrix and the documents' category, some state-of-the-art supervised classifiers are trained. Then the best classifier in terms of accuracy is selected as the model for classification.

In Task 2, based on the method developed in reference [1], a model is built to extract the hidden hierarchies among the documents and corresponding topics. In this method, a Bayesian nonparametric model is fitted to the TF matrix, and then a posterior inference is applied. This leads to clustering the documents according to their hierarchies, i.e. documents with the same topics are in the same hierarchy (cluster). The number of hierarchies (clusters) is determined by the method.

In Task 3, a summarizing model is built by applying the Graph-based ranking method discussed in reference [2]. In this method, each sentence in a document is treated as a vertex. Then based on a similarity measure devised in reference [2] the similarity among sentences are calculated. Vertices corresponding to sentences whose similarity measure is greater than zero are connected by an edge. As a result, a weighted graph representing the similarity among the sentences is formed. By applying the ranking algorithm mentioned in reference [2], vertices (sentences) are ranked. The sentences with the highest ranks are selected to summarize the document.

The model also provides a summary for all documents belonging to the same hierarchy. This is done by feeding the content of all documents as a single document into the model. The model then provides a summary serving as a review of all documents in that hierarchy.

In Task 4, a model is built to extract a set of keywords for each document. The method used in Task 3 is also applied in this task. The vertices of the graph for this task are, however, words in the document. Then as discussed in Task 3, words (vertices) are scored and ranked. Words with the highest scores are selected as keywords for the given document.

In order to find analogy between a specific document and the training documents, in Task 5, a model is built by using the cosine similarity measure. To do that, a TF matrix for the specified document is formed in the preprocessing phase. Then by applying the cosine similarity measure on the TF matrices of the training documents and the specific document, the training documents are ranked. Documents with the highest ranks are selected as the most similar documents to the specific document. As a result, all documents that share context similarity with the given document are listed along with their similarity score.

Task 6 consists of building a model such that according to the category of each single document, the model extracts relevant internal and external metadata. Examples of Internal metadata are names, address and email addresses, phone numbers, and social IDs of individuals mentioned in a document. External metadata are related to archiving policies such as retention, disclosure, and information security policies.

To build a model for extracting the internal metadata, a set of training data based on the training documents are formed. To do that, entities such as names, addresses, emails, and social IDs are extracted from the documents, and manually labeled. Then a model is built based upon this training set to learn the relation between entities and corresponding labels.

External metadata are provided initially by archivists. These data are tied with documents' category. Another model is built to learn the relation between each document (according to its category) and the external metadata.

External metadata may be revised due to new policies, regulations, or legislations. This necessitates updating the external metadata of the archived documents. To do that, archivists provide new external metadata corresponding to documents' category. The model in Task 5 is then retrained by using the new external metadata and corresponding categories. As a result, the information regarding the external metadata of the archived documents are updated. This information is also provided to archivists.

It is obvious to an expert in the art that different embodiments and applications of the invention are not limited to the example described above, but that they may be varied within the scope of the claims presented below. Thus, for example, the method can comprise also different phases and tasks as described above.

### References

[1] Chong Wang, John Paisley and David M. Blei. Online variational inference for the hierarchical Dirichlet process, Appearing in Proceedings of the 14th International Conference on Artificial Intelligence and Statistics (AISTATS), 2011.
[2] Federico Barrios, Federico Lopez, Luis Argerich, Rosa Wachenchauzer, Variations of the Similarity Function of TextRank for Automated Summarization, the Argentine Symposium on Artificial Intelligence (ASAI), 2015.

## Claims

1. Method for archiving documents, which the method utilizes artificial intelligence (AI) and machine learning (ML) to convert the corpus of documents into a numeric term-document matrices, **characterized in that** supervised and unsupervised machine learning (ML) methods are utilized to the mentioned numerical term-document matrices to analyze documents and to
- classify documents,
- extract the hidden hierarchies of documents,
- summarizes each document and all documents in the same hierarchy,
- extract keywords in each document,
- discover similarities among documents, and
- extract relevant metadata of each document.

2. Method according to claim 1, **characterized in that** a set of training documents along with the state-of-the-art natural language processing algorithms are employed to build AI-models for analyzing documents.

3. Method according to claims 1 or 2, **characterized in that** the documents are in digital form and the method involves a preprocessing phase and an analysis phase to process the documents.

4. Method according to claim 3, **characterized in that**, in the preprocessing phase irrelevant words are omitted from the texts based on a predefined dataset containing irrelevant words, and **in that** the training documents are converted from words and texts into numerical data into Term Frequency matrix (TF matrix) and Term Frequency-Inverse Document Frequency matrix (TFID matrix).

5. Method according to claims 3 or 4, **characterized in that** in the analysis phase the numerical data is processed and AI models are used to analyze the documents, to extract relevant information from the documents, and to archive the documents and their corresponding relevant information.

6. Method according to claims 3, 4 or 5, **characterized in that** in the analysis phase the documents are classified according to their categories by training state-of-the-art supervised classifiers using TFIDF matrix and the category of the document and then by selecting the best classifier in terms of accuracy.

7. Method according to claims 3-6, **characterized in that** in the analysis phase hidden hierarchies from the documents are extracted by fitting a Bayesien nonparametric model to the TF matrix and then applying a posterior inference.

8. Method according to claims 3-7, **characterized in that** in the analysis phase documents are summarized using graph-based ranking method, in which method each sentence in a document is treated as a vertex and the similarity among the sentences are calculated, after which vertices corresponding to sentences whose similarity measure is greater than zero are connected by an edge and the vertices are ranked by a ranking algorithm where sentences with highest ranks are selected to summarize the document.

9. Method according to claim 8, **characterized in that** all documents belonging to the same hierarchy are summarized as a group by feeding the content of all documents belonging to the same hierarchy into a single document and utilizing the summarizing method presented in claim 8 to this single document.

10. Method according to claim 8, **characterized in that** the set of the keywords from the documents are extracted by applying the method presented in claim 8 but handling the words in the document instead of the sentences when words with the highest ranks are selected as keywords for the given document.

11. Method according to claims 3-10, **characterized in that** in the analysis phase the documents similarity is discovered by ranking training documents applying cosine similarity measure on the TF matrices of training documents and the specific document, and then selecting highest ranked training documents as the most similar documents to the specific document, and as a result all documents that share context similarity with given document are listed along with their similarity score.

12. Method according to any of the claims above, **characterized in that** according to the category of each single document the relevant internal metadata and external metadata is extracted from the documents.

13. Method according to claim 12, **characterized in that** the AI/ML algorithms are utilized to create automatically external metadata to the document for the document retention schedule.

14. Method according to any of the claims above, **characterized in that** new documents containing new information are used to update and retrain the AI models.

15. Method according to any of the claims above, **characterized in that** the created archiving information of documents is reported to archivists.
